# EUROPEAN PATENT SPECIFICATION

(11) **EP 1 829 284 B1**
(45) Date of publication and mention of the grant of the patent: **20.05.2009**
(21) Application number: 05761641.9
(22) Date of filing: 30.06.2005
(51) Int. Cl.: G06F 17/30, H04L 29/02, H04L 12/02

(54) **SYSTEM AND METHOD FOR ENHANCING NETWORK-BROWSING SPEED BY SETTING A PROXY SERVER ON A HANDHELD DEVICE**
SYSTEM UND VERFAHREN ZUR VERBESSERUNG DER NETZWERK-BROWSING-GESCHWINDIGKEIT DURCH EINSATZ EINES PROXY-SERVERS AUF EINEM TRAGBAREN ENDGERÄT
SYSTEME ET PROCEDE PERMETTANT D'AMELIORER LA VITESSE DE NAVIGATION SUR UN RESEAU PAR FIXATION D'UN SERVEUR PROXY SUR UN DISPOSITIF PORTABLE

(30) Priority: 22.12.2004 US 639077 P
(43) Date of publication of application: 05.09.2007
(73) Proprietor: Research In Motion Limited, Waterloo, Ontario N2L 3W8 (CA)
(72) Inventor: VAN GEEST, Daniel, Kitchener, Ontario N2H 6S5 (CA); MAURICE, Robbie, Waterloo, Ontario N2V 2M8 (CA)
(74) Representative: Roberts, Gwilym Vaughan
(86) International application number: PCT/CA2005/001028
(87) International publication number: WO 2006/066382

(56) References cited:
- WO-A-01/33804
- WO-A-97/35402
- WO-A1-97/35402
- LEUNG V C M: "Proxy services for the mobile internet" PERSONAL, INDOOR AND MOBILE RADIO COMMUNICATIONS, 2004. PIMRC 2004. 15TH IEEE INTERNATIONAL SYMPOSIUM ON BARCELONA, SPAIN 5-8 SEPT. 2004, PISCATAWAY, NJ, USA,IEEE, vol. 2, 5 September 2004 (2004-09-05), pages 1230-1235, XP010754164 ISBN: 0-7803-8523-3
- ZHANPING YIN ET AL: "A proxy architecture to enhance the performance of WAP 2.0 by data compression" WIRELESS COMMUNICATIONS AND NETWORKING, 2003. WCNC 2003. 2003 IEEE 16-20 MARCH 2003, PISCATAWAY, NJ, USA,IEEE, vol. 2, 16 March 2003 (2003-03-16), pages 1322-1327, XP010639959 ISBN: 0-7803-7700-1
- LEUNG V.C.M.: 'Proxy service for the mobile Internet' PERSONAL, INDOOR AND MOBILE RADIO COMMUNICATION, PIMRC 2004 vol. 2, September 2004, pages 1230 - 1235, XP010754164
- LEUNG V.C.M. ET AL.: 'A proxy architecture to enhance the performance of WAP 2.0 by data compression' WIRELESS COMMUNICATIONS AND NETWORKING, WCNC 2003 vol. 2, March 2004, pages 1322 - 1327, XP010639959

## Description

### CROSS-REFERENCE TO RELATED APPLICATION

The instant application claims priority from U.S. Provisional Patent Application Serial No. 60/639,077 filed December 22, 2004 Publication No. US 2006/0168349.

### TECHNICAL FIELD OF THE APPLICATION

The present application relates generally to handheld devices, and more particularly to systems and methods for enhancing network-browsing speed by setting proxy servers on handheld devices.

### BACKGROUND

Many handheld devices may access the Internet wirelessly with browsers on the handheld devices. Some of them experience inefficiencies in browsing the Internet. One reason is that the data is sent across the air uncompressed. This increases traffic and lowers browsing speed. Another reason is that the browser may have to make multiple requests before it is able to display a single document. For example, a browser may send a HTTP (Hypertext Transfer Protocol) request via a wireless link to a website to request a webpage, the website may send back a response via the wireless link to the browser to say the requested page is at another website, and then the browser must send another ' request to the website to fetch the page. Requests and responses are sent back and forth wirelessly multiple times, slowing browsing speed and delaying webpage delivery. Users may lose patience in accessing a message on the Internet.

Therefore, a need has arisen for increasing browsing speed by setting up proxy server on a handheld device to utilize a wireless connection transport system with one over-the-air request and response.

International Patent Publication Number WO 97/35402 discloses a remote proxy system and method. An interface between a protected computer or computer network and the World Wide Web comprises a spilt proxy system that encapsulates TCP/IP transmissions into a script transmission which is not subject to problems in high latency systems. The split proxy interface also provides compression, encryption and filtering capabilities and allows receipt of unsolicited transmissions from the service provider for such purposes as automatically updating or configuring WWW access software.

International Patent Publication Number WO 01/33804 discloses a system and method for effective use of a link between mobile station and gateway service. The method provides that a mobile station transmits to a gateway server a request for a content and/or a resource located on a web server using a first protocol. The gateway server then transmits the request to the web server using a second protocol that is compatible with that used by the web server. The gateway server receives a redirection message from the web server indicating a new location of the content and/or resource. Ultimately, the requested content and/or resource is transmitted to the mobile station.

### SUMMARY

The invention is defined in the independent claims. Some optional features are defined in the dependent claims.

In one example useful in assisting understanding of the invention, a cache is provided in the proxy server for caching images embedded in an HTML response. When the browser requests the images after it examines the HTML response, the proxy will return these images from the cache. MDS gateway transcodes and compresses the HTML response and embedded the images to reduce the number of wireless transactions.

In a further such example, the proxy processes a request from browser to add headers for identifying the handheld device's screen dimension and numbers of colors and requesting MDS gateway to resize images to fit the screen dimension. The cache stores the resized images for the browser to request. MDS gateway reduces the image's size before sending image wirelessly to increase network-browsing speed.

### BRIEF DESCRIPTION OF THE DRAWINGS

For a more complete understanding of the features and advantages of the present system and method, reference is now made to the detailed description along with the accompanying figures in which corresponding numerals in the different figures refer to corresponding parts and in which:
Figure 1 shows an exemplary handheld device which communicates with websites over a wireless network by multiple requests and responses according to prior art;
Figure 2 shows a wireless connection transport system in which the present application may be implemented wherein one request and one response are sent wirelessly;
Figure 3 is a block diagram of an embodiment wherein the handheld device of figure 1 implements one request and one response to be sent wirelessly by setting up a proxy server in the handheld device and operating in the wireless connection transport architecture of fi gure 2 according to this application;
Figure 4 is a flowchart of a method for implementing one request and one response sent wirelessly according to a first embodiment of this application;
Figure 5 is a flowchart showing an embodiment of the method of carrying out the step 420 of Figure 4;
Figure 6 is a flowchart showing an embodiment of the method of carrying out the step 425 of Figure 4;
Figure 7 is a block diagram wherein a proxy server caches images included in a response according to a second embodiment of this application; and
Figure 8 is a flowchart of a method for implementing one request and one response sent wirelessly according to the second embodiment of this application.

### DETAILED DESCRIPTION

There is a wireless connection transport architecture which implements one request and one response to be sent wirelessly with Mobile Data Service (MDS). The present application implements a handheld device which may perform multiple requests during accessing Internet to operate in the above wireless connection transport architecture so that a browser on the handheld device accesses Internet with one over-the-air request and response. Therefore, there is a need to interface the browser to the above wireless connection transport architecture. Since most browsers allow their connections to be routed through a proxy, a proxy is set in the handheld device to make the browser to access Internet by means of the above wireless connection transport architecture.

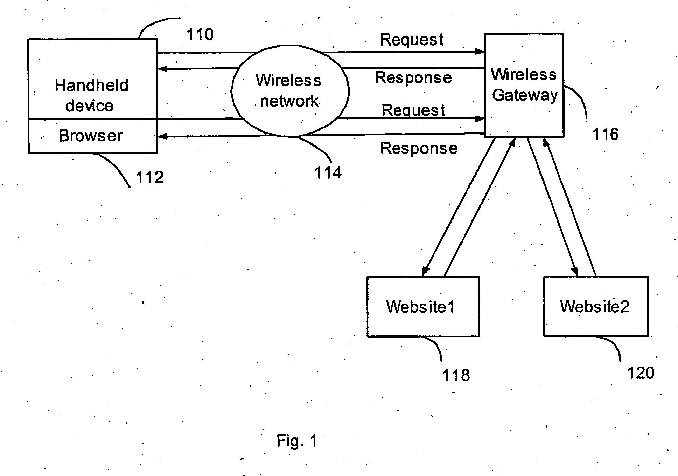

Figure 1 briefly shows a traditional wireless network that a handheld device communicates with websites by multiple requests according to prior art. Handheld device 110 communicates with wireless gateway 116 via a wireless network 114. Browser 112 in the handheld device 110 sends a HTTP request to website 118 via wireless gateway 116. Website 118 may send a response to browser 112 via wireless gateway 116 to say the requested message is on website 120. Browser 112 sends another request to website 120 to fetch the requested message. Multiple requests and responses are sent in the air to make browsing slow and low efficiency.

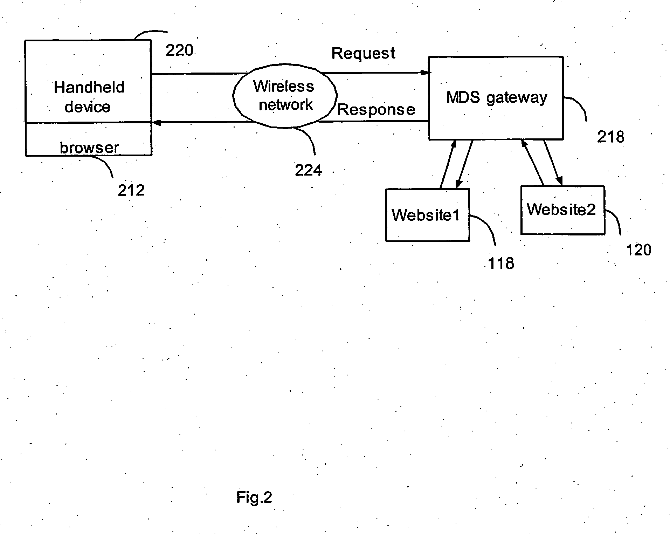

Figure 2 shows a wireless connection transport system in which the present application may be implemented wherein one request and one response are sent wirelessly. Browser 212 sends a request to MDS gateway 218. MDS Gateway 218 receives a response from website 118 and sends the response to browser 212 by means of MDS gateway 218. If the requested data is not available from website 118, MDS gateway 218 receives a redirect response from website 118, which points it to website 120. MDS gateway 218 then sends a request to website 120 to fetch the requested data. MDS gateway 218 sends one final response to handheld device 220. As shown in this figure 2, one request and one response are sent via the wireless network 224.

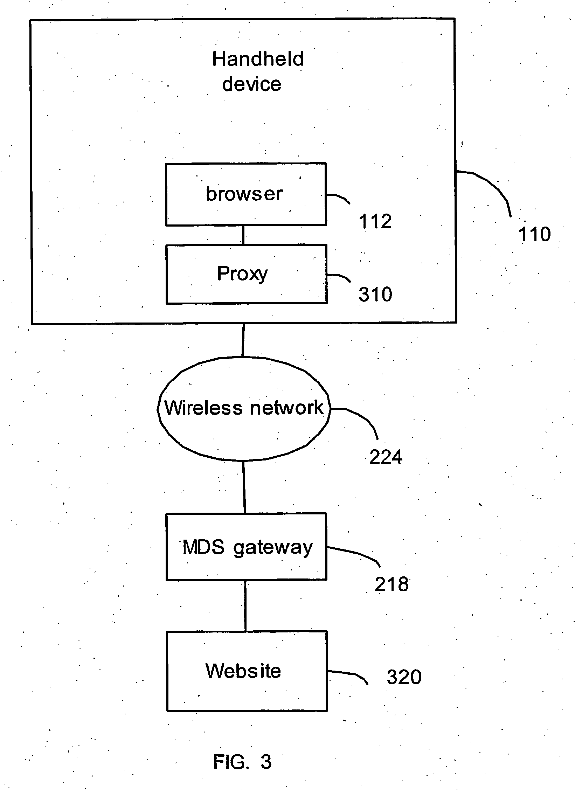

Figure 3 illustrates a block diagram of an embodiment wherein the handheld device of figure 1 implements one request and one response to be sent wirelessly by setting a proxy server on the handheld device and operating in the wireless connection transport system of figure 2 according to this application. As shown in figure 3, browser 112 operates on handheld device 110. Proxy server 310 is set on the handheld device. Which communicates with MDS gateway 218 via wireless network 224. Proxy server 310 receives a HTTP request, transcodes and compresses it to reduce bandwidth and forwards it to MDS Gateway 218. After processing the request, MDS gateway 218 sends the request to website 320 and website 320 sends a response to MDS gateway 218. MDS gateway 218 may process the response, for example, by transcoding and compressing, and sends the response to proxy 310. Proxy 310 processes the response and sends it to browser 112. If there is a redirect response and a redirect request occurred in MDS gateway 218, MDS gateway 218 receives a redirect response including an actual address of the requested message, sends a request for requesting the redirected response, and receives the requested message. MDS gateway 218 may process the requested message such as by transcoding and compressing and return it to proxy 310. Proxy 310 may process the requested message such as by transcoding and decompressing. Proxy 310 further sends a signal to notify browser 112 that the requested message does not exist at website 320 and a redirect occurred in MDS gateway 218, receives a request signal from browser 112 for requesting the redirected message, and then sends the requested message to browser 112. Proxy 310 may decompress and transcode the responses if the response was transcoded and compressed. Therefore, one request and one response occur wirelessly. Redirect occurs between MDS gateway 218 and websites and subsequently between browser 112 and proxy 310 within handheld device 110. It does not occur wirelessly. MDS gateway may perform many types of transcoding, for example, it tokenizes HTTP headers to reduce bandwidth, transcodes images in order to reduce bandwidth and make them fit a small screen, transcodes HTML to reduce bandwidth, and send HTML and images together in one response to save the handheld from having to make multiple wireless requests.

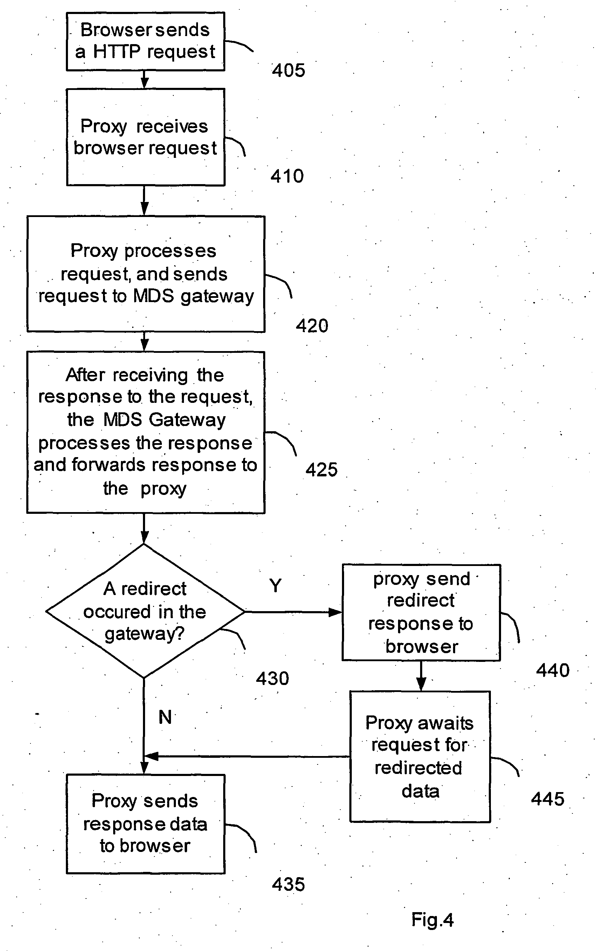

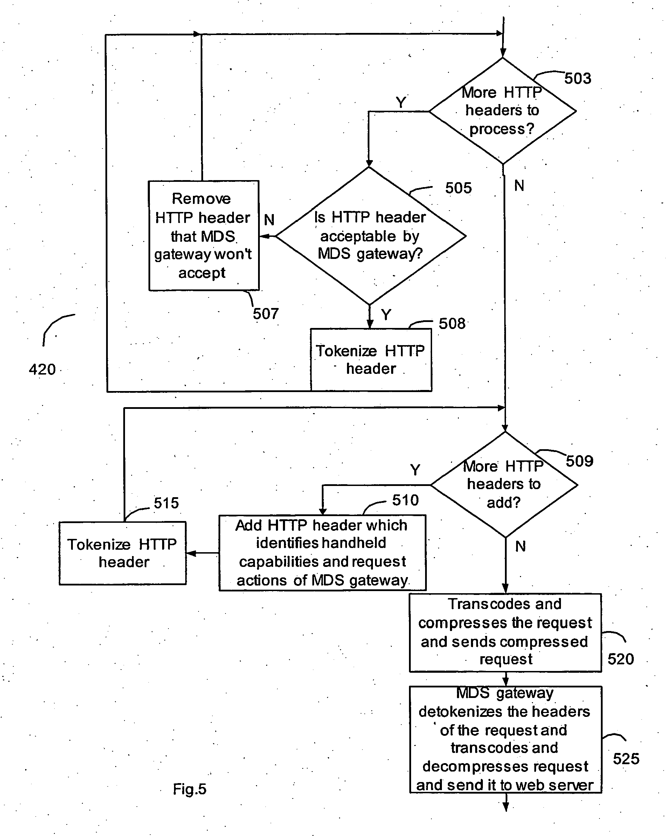

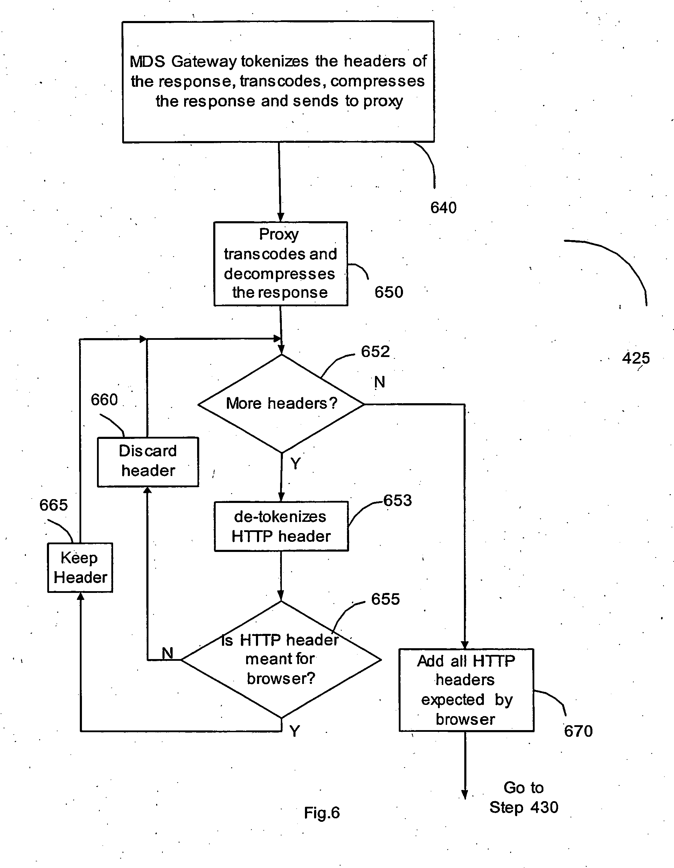

Figure 4 is a flowchart showing a first embodiment of a method for implementing one request and one response sent wirelessly. Browser 112 sends a HTTP request for a message at a website 320 at step 405, and proxy server 310 receives the HTTP request at step 410. At step 420, proxy server 310 processes the header of the request so that MDS gateway 218 accepts the request, transcodes and compresses the request, and then proxy server 310 sends the request to MDS gateway 218. At step 425, MDS gateway 218 receives response data from the website 320, processes the response, and sends the response to proxy server 310. The details of steps 420 and 425 will be further described in figure 5 and figure 6. At step 430, it is determined if a redirect has occurred in the gateway. If no, proxy server 310 sends the requested message response data to browser 112 at step 435. MDS gateway 218 also processes a redirect when the requested message is not at website 320. MDS gateway 218 receives a redirect response including an actual address of the requested message from a server (not shown), and sends a redirect request for requesting the requested message from the address, and then MDS gateway 218 receives the requested message. This redirect does not happen wirelessly. If a redirect occurred in MDS gateway 218, proxy server 310 sends a notification signal containing the actual address of the requested message to browser 112 and notifies there is a redirect occurred in MDS gateway 218 at step 440, and receives a request signal for requesting the redirected data from browser 112 at step 445, and then proxy server 310 sends the requested message to browser 112 at step 435. The redirected message may be processed in MDS gateway 218 and proxy server 310 at step 425 as described with reference to figure 6 in detail.

These multiple requests resulted from a redirect occur between proxy server 310 and browser 112 within handheld device 110. It does not happen wirelessly. Therefore, the browsing speed is enhanced.

Figure 5 is a flowchart showing an embodiment of the method of carrying out the step 420 of Figure 4. A HTTP request may have one or more header fields, and each field includes a header. A HTTP request may not have any header field. Each HTTP header field is examined individually. At step 503, it is determined if there are more HTTP header fields to be processed. If not, the process proceeds to 509. If there is any HTTP header field to be processed, it proceeds to 505where proxy server 310 reads a HTTP header field and determines if the HTTP header of the HTTP header field is accepted by MDS gateway 218. If yes, proxy server 310 tokenizes the header at 508 and then the process returns to 503. If the HTTP header is not accepted, the HTTP header is removed at step 507, and the process returns to 503. When all the headers in the header fields have been processed, the processes goes to 509 where it is determined if there are HTTP headers required by MDS gateway 218 to be added. If there is any HTTP headers required to be added, the process goes to 510 where a HTTP header which identifies the handheld device capabilities and requests actions of MDS gateway 218 is added, and at 515, the HTTP header is tokenized. If there are no more headers to be added, at step 520, proxy server 310 transcodes and compresses the HTTP request to reduce the amount of data sent over the air. At step 525, MDS gateway 218 de-tokenizes the HTTP headers of the request, decompresses and transcodes the request and sends it to a website.

Figure 6 is a flowchart showing an embodiment of the method of carrying out the step 425 of Figure 4. MDS gateway 218 receives requested response data from a website, tokenizes the HTTP headers of the response, transcodes and compresses the requested response data and sends it to the proxy 310 wirelessly at step 640. The proxy 310 decompresses the requested response at step 650. The HTTP headers in HTTP header fields are examined. At step 652, it is determined if there is any HTTP header included in the requested response to be examined, and if there is no HTTP headers to be examined, the process proceeds to 670 where any extra headers that the browser expects are added and then proceeds to step 430. If there are more headers to be examined, one unexamined HTTP header is read and is de-tokenized at step 653. At step 655, it is determined if the HTTP header is accepted by the browser 112, and the process goes to step 660 where the HTTP header is discarded if the header is not accepted by the browser 112, or goes to 665 where the header is kept if the header is accepted by the browser 112. The next header is then examined at step 652 again until all headers are examined.

In this embodiment, the requested response may be an HTML, XML, WML, or other response, and may include one or more images, webpages, documents, or a combination of document and image.

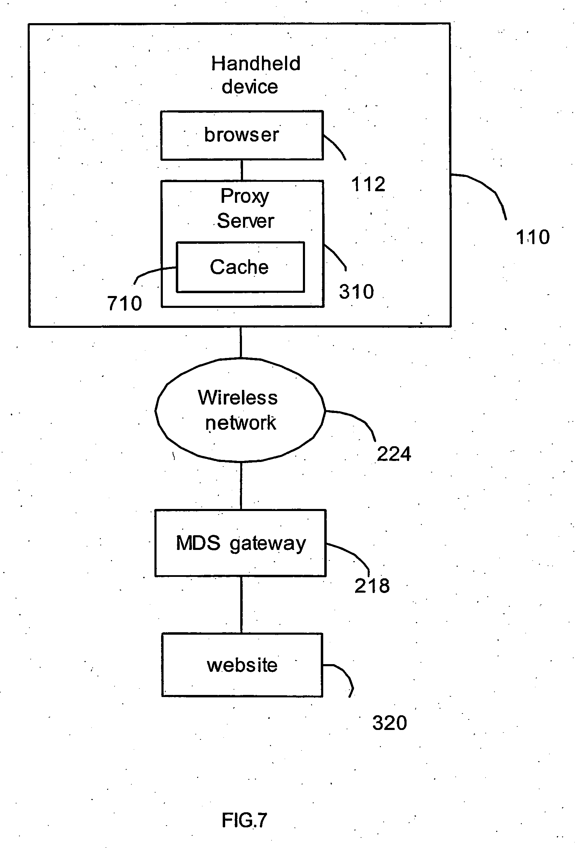

Figure 7 is a block diagram wherein a proxy server stores images included in a response according to a second embodiment of this application. The MDS Gateway may send a response including multiple documents such as a text document and images. For example, a response may include an HTML page and one or more images referenced in the HTML page. When a browser receives the HTML response, after checking the response, it may send another request to fetch images over the air. In this embodiment, a cache 710 is provided in proxy server 310 for storing images that were embedded in the response. When the browser requests images after checking the response, the proxy 310 sends the images without having to make another over-the-air request, so it makes browsing fast. As shown Figure 7, cache 710 is set in the proxy server 310 for storing images in a response.

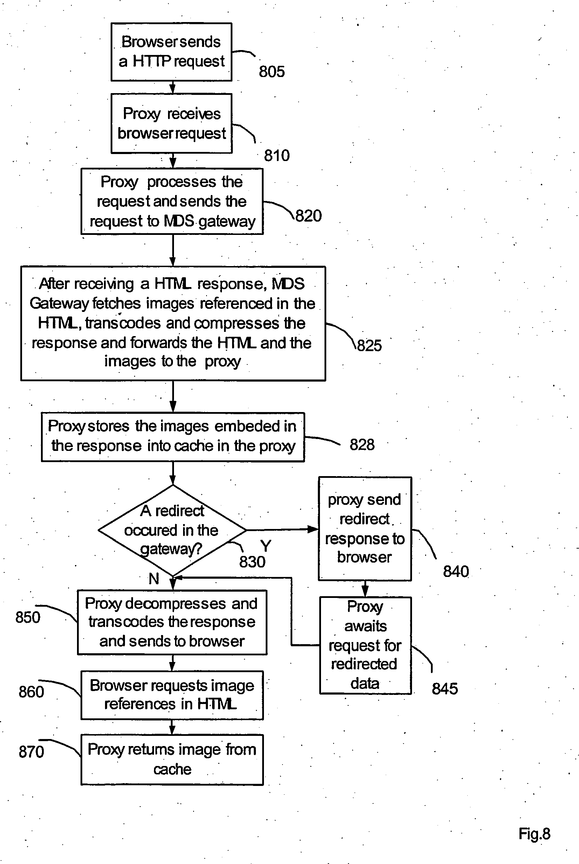

Figure 8 is a flowchart of a method for implementing one request and one response sent wirelessly according to the second embodiment of this application, as shown in figure 7. Browser 112 sends an HTTP request for a message at website 320 at step 805, and proxy server 310 receives the HTTP request at step 810. The proxy 310 processes the request and sends the request to MDS gateway 218 at step 820. The process of step 820 is same as that of step 420 shown in figure 5. At step 825, MDS gateway 218 receives an HTTP response such as an HTML response and fetches any images referenced in the HTML, transcodes and compresses the response to reduce the amount of data and bandwidth, and sends the response data including HTML documents and images to the proxy server 310. The process of step 825 is similar to step 425 shown in figure 6 where the headers of the HTTP response are processed. Proxy 310 stores the images embedded in the response into cache 710 at step 828. At step 830, it is determined if a redirect occurred in the gateway. If a redirect occurred in the gateway, proxy server 310 sends a notification signal including the actual location of the requested message to the browser 112 and notifies it that a redirect occurred in MDS gateway 218 at step 840, and receives a request for redirected data from browser 112 at step 845. This notification signal and the request signal for redirected data between proxy server 310 and browser 112 occur within handheld device, and do not happen wirelessly. Therefore, the network-browsing speed is increased. At step 850, proxy 310 decompresses and transcodes the response back into its original format such as HTML format, and then sends the response to browser 112. The browser 112 then requests an image referenced in the HTML response at step 860, and the proxy 310 finds the image in cache 710 at step 870, so it sends this image data and avoids a wireless request.

In this embodiment, the MDS gateway transcodes and compresses the HTML response, it allows only one over-the-air request and response for multiple documents which may include HTML pages and images. Alternatively, the response in this embodiment may be a WML, XML or other existing webpage response format.

In one embodiment, browser 112 may request an image document that only includes one or more images. MDS gateway 218 sends the requested images, and caches 710 stores the requested images for browser 112 to request the images within handheld device. This avoids image transmission wirelessly.

In a further embodiment, MDS gateway 218 may resize the requested images to fit the handheld device's screen capabilities. In this embodiment, at step 510 of figure 5, the headers which identify handheld device's screen dimensions and/or number of colors and request MDS gateway 218 to resize images are added. MDS gateway 218 utilizes the headers to resize the requested images. MDS gateway 218 sends the requested image in a response, either by itself or embedded in a HTTP response or a text, depending on what was requested by browser 112. Proxy server 310 caches images if browser 112 requested the image only or requested embedded images in a HTTP response or a text, and then proxy server 310 just returns the image to browser 112 when browser 112 requests the image. This saves a lot of bandwidth since large images may be reduced before they are transmitted wirelessly, avoids multiple transmission of images wirelessly, and increases the network browsing speed.

The requests from the browser and responses from website as described above are not limited to HTTP requests and HTTP responses, and they may be any TCP (transmission control protocol) request and response, and any UDP (User Datagram Protocol) request and response. Those skilled in the art will appreciate that TCP request and response include, but not limited to HTTP, FTP (file transfer protocol), Telnet, Finger, SSH (secure shell), DNS (Domain Name Server), POP3/IMAP, SMTP. Gopher, BGP (Border Gateway Protocol), Time/NTP, whois, TACACS+, SSL (Secure Sockets Layer), RTSP (Real-time Streaming Protocol), LDAP (Directory Access Protocol).

## Claims

1. A system for enhancing network-browsing speed by setting a proxy server (310) on a handheld device (110, 220), comprising:
a browser (112, 212) operating on the handheld device for sending a request for requesting a message from a first website (118);
the proxy server being provided on the handheld device for transcoding and compressing the request;
a wireless network (224) communicably linked to the proxy server; and
a Mobile Data Service (MDS) gateway (218) communicably linked to the wireless network for transcoding and decompressing the request, wherein said MDS gateway is configured to receive said request from said proxy server and to send said request to said first website, wherein said MDS gateway is configured to receive a response from said first website;
wherein, if said message is not available from the.first website,
the MDS gateway is configured to receive the response comprising a redirect response including an address of the message
and to send a redirect request to a second website (120) at said address requesting the message therefrom and in response thereto to receive the message;
the MDS gateway is configured to transcode and compress the message and to send it to said proxy server;
whereupon the proxy server is configured to transcode and decompress the message and to send a notification to the browser that indicates that a redirect has occurred in the MDS gateway and that includes the address;
the browser is configured to send a second request to the proxy server requesting the message; and
in response to said second request, the proxy server is configured to send the message to the browser.

2. The system of claim 1, wherein the request includes multiple headers, and wherein the proxy server is configured, prior to transcoding and compressing the request, to examine each of said headers of the request individually, to remove any of the headers from the request not acceptable by the MDS gateway, to add to the request any new headers required by the MDS gateway, and to tokenize the headers remaining in the request, and the new headers added to the request.

3. The system of claim 2, wherein the MDS gateway is configured to de-tokenize the headers remaining in the request and the new headers added to the request.

4. The system of claim 1, wherein the MDS gateway is configured to receive the message where the message includes one or more headers, and wherein the MDS gateway is configured to tokenize the headers of the message.

5. The system of claim 1, wherein the proxy server is configured to receive the message, where the message includes multiple headers, and wherein the proxy server is configured, prior to sending the message to the browser: to examine each header of the message individually, to de-tokenize each header of the message, to remove any of the headers of the message not acceptable by the browser, and to add any new headers expected by the browser to the message.

6. The system of claim 1, wherein configured to send the request for requesting the message as a protocol request using TCP connection.

7. The system of claim, 1, wherein configured to send the request for requesting the message as a protocol request using UDP.

8. A method for enhancing network-browsing speed by setting a proxy server (310) on a handheld device (110, 220), comprising:
sending a request for requesting a message from a first website (118) by a browser (112, 212) operating on the handheld device;
transcoding and compressing the request by the proxy server;
sending the request by the proxy server to a MDS gateway (218) via a wireless network (224);
transcoding and decompressing the request by the MDS gateway and wherein the MDS gateway sends the request to said first website;
receiving a response from the first website by the MDS gateway, wherein if the message is not available from the first website the MDS gateway receives the response comprising a redirect response including an address of the message , and
sending a redirect request requesting the message from a second website (120) at the address by the MDS gateway and in response thereto receiving the message by the MDS gateway;
transcoding and compressing the message by the MDS gateway;
sending the message to the proxy server via the wireless network by the MDS gateway;
transcoding and decompressing the message by the proxy server, wherein the proxy server sends a notification to the browser indicating that a redirect has occurred in the MDS gateway, the notification including the address; and
receiving a second request from the browser at the proxy server requesting the message and in response to the second request, the proxy server sends the message to the browser.

9. The method of claim 8, wherein the request includes multiple headers, and wherein, before the step of transcoding and compressing the request by the proxy server, the method further comprises:
examining each the headers of the request;
removing any of the headers from the request not acceptable by the MDS gateway;
adding to the request any new headers required by the MDS gateway; and
tokenizing the headers remaining in the request and the new headers added to the request.

10. The method of claim 9, before the step of transcoding and decompressing the request by the MDS gateway, further comprising de-tokenizing the headers remaining in the request and the new headers added to the request.

11. The method of claim 8, wherein the message received by the MDS gateway includes one or more headers and wherein before the step of transcoding and compressing the message by the MDS gateway, the method further comprises tokenizing the headers of the message.

12. The method of claim 11, wherein after the step of transcoding and decompressing the response by the proxy server, the method further comprises:
examining each of the headers of the message;
de-tokenizing each of the headers of the message;
removing any of the headers of the message not acceptable by the browser; and
adding any new headers expected by the browser to the message.

13. The method of claim 8, wherein the request is a protocol request using a TCP connection.

14. The method of claim 8, wherein the request is a protocol request using UDP.

## Patentansprüche

1. System zum Verbessern einer Netzwerk-Browsing-Geschwindigkeit durch Einstellung eines Proxy-Servers (310) auf einer handgehaltenen bzw. tragbaren Vorrichtung (110, 220), das aufweist:
einen Browser (112, 212), der auf der tragbaren Vorrichtung arbeitet, zum Senden einer Anforderung zum Anfordern einer Nachricht von einer ersten Website (118);
wobei der Proxy-Server auf der tragbaren Vorrichtung vorgesehen ist zum Transcodieren und Komprimieren der Anforderung;
ein drahtloses Netzwerk (224), das zur Kommunikation fähig mit dem Proxy-Server verbunden ist; und
ein MDS(Mobile Data Service)-Gateway (218), das zur Kommunikation fähig mit dem drahtlosen Netzwerk verbunden ist zum Transcodieren und Dekomprimieren der Anforderung, wobei das MDS-Gateway konfiguriert ist, die Anforderung von dem Proxy-Server zu empfangen und die Anforderung an die erste Website zu senden, wobei das MDS-Gateway konfiguriert ist, eine Antwort von der ersten Website zu empfangen;
wobei, wenn die Nachricht nicht verfügbar ist von der ersten Website, das MDS-Gateway konfiguriert ist, die Antwort zu empfangen, die eine Umleitungs-Antwort mit einer Adresse der Nachricht aufweist, und eine Umleitungs-Anforderung an eine zweite Website (120) an der Adresse zu senden, welche die Nachricht von dort anfordert, und als Antwort darauf die Nachricht zu empfangen;
wobei das MDS-Gateway konfiguriert ist, die Nachricht zu transcodieren und zu komprimieren und sie an den Proxy-Server zu senden;
woraufhin der Proxy-Server konfiguriert ist, die Nachricht zu transcodieren und zu dekomprimieren und eine Benachrichtigung an den Browser zu senden, die anzeigt, dass eine Um- bzw. Weiterleitung in dem MDS-Gateway stattgefunden hat, und diese umfasst die Adresse;
wobei der Browser konfiguriert ist, eine zweite Anforderung an den Proxy-Server zu senden, die die Nachricht anfordert; und
als Antwort auf diese zweite Anforderung der Proxy-Server konfiguriert ist, die Nachricht an den Browser zu senden.

2. System gemäß Anspruch 1, wobei die Anforderung mehrere Header umfasst, und wobei der Proxy-Server konfiguriert ist, vor einer Transcodierung und Komprimierung der Anforderung, jeden der Header der Anforderung einzeln zu untersuchen, um die Header aus der Anforderung zu entfernen, die durch das MDS-Gateway nicht akzeptabel sind, und zu der Anforderung neue Header hinzuzufügen, die durch das MDS-Gateway erforderlich sind, und die Header, die in der Anforderung verbleiben, und die neuen Header, die zu der Anforderung hinzugefügt werden, zu tokenisieren (tokenize).

3. System gemäß Anspruch 2, wobei das MDS-Gateway konfiguriert ist, die Header, die in der Anforderung verbleiben, und die neuen Header, die zu der Anforderung hinzugefügt werden, zu de-tokenisieren (de-tokenize).

4. System gemäß Anspruch 1, wobei das MDS-Gateway konfiguriert ist, die Nachricht zu empfangen, wobei die Nachricht einen oder mehrere Header umfasst, und wobei das MDS-Gateway konfiguriert ist, die Header der Nachricht zu tokenisieren.

5. System gemäß Anspruch 1, wobei der Proxy-Server konfiguriert ist, die Nachricht zu empfangen, wobei die Nachricht mehrere Header umfasst, und
wobei der Proxy-Server konfiguriert ist, vor dem Senden der Nachricht an den Browser: jeden Header der Nachricht einzeln zu untersuchen, jeden Header der Nachricht zu de-tokenisieren, Header der Nachricht zu entfernen, die durch den Browser nicht akzeptabel sind, und neue Header zu der Nachricht hinzuzufügen, die durch den Browser erwartet werden.

6. System gemäß Anspruch 1, konfiguriert, die Anforderung zum Anfordern der Nachricht als eine Protokollanforderung unter Verwendung einer TCP-Verbindung zu senden.

7. System gemäß Anspruch 1, konfiguriert, die Anforderung zum Anfordern der Nachricht als eine Protokollanforderung unter Verwendung von UDP zu senden.

8. Verfahren zum Verbessern einer Netzwerk-Browsing-Geschwindigkeit durch Einstellung eines Proxy-Servers (310) auf einer handgehaltenen bzw. tragbaren Vorrichtung (110, 220), das aufweist:
Senden einer Anforderung zum Anfordern einer Nachricht von einer ersten Website (118) durch einen Browser (112, 212), der auf der tragbaren Vorrichtung arbeitet;
Transcodieren und Komprimieren der Anforderung durch den Proxy-Server;
Senden der Anforderung durch den Proxy-Server an ein MDS-Gateway (218) über ein drahtloses Netzwerk (224);
Transcodieren und Dekomprimieren der Anforderung durch das MDS-Gateway, und wobei das MDS-Gateway die Anforderung an die erste Website sendet;
Empfangen einer Antwort von der ersten Website durch das MDS-Gateway, wobei, wenn die Nachricht nicht verfügbar ist von der ersten Website, das MDS-Gateway die Antwort empfängt, die eine Umleitungs-Antwort mit einer Adresse der Nachricht aufweist, und
Senden einer Umleitungs-Anforderung, welche die Nachricht von einer zweiten Website (120) anfordert, an die Adresse durch das MDS-Gateway und als Antwort darauf Empfangen der Nachricht durch das MDS-Gateway;
Transcodieren und Komprimieren der Nachricht durch das MDS-Gateway;
Senden der Nachricht an den Proxy-Server über das drahtlose Netzwerk durch das MDS-Gateway;
Transcodieren und Dekomprimieren der Nachricht durch den Proxy-Server, wobei der Proxy-Server eine Benachrichtigung an den Browser sendet, die anzeigt, dass eine Um- bzw. Weiterleitung in dem MDS-Gateway stattgefunden hat, wobei die Benachrichtigung die Adresse umfasst; und
Empfangen einer zweiten Anforderung, welche die Nachricht anfordert, von dem Browser an dem Proxy-Server und als Antwort auf zweite Anforderung sendet der Proxy-Server die Nachricht an den Browser.

9. Verfahren gemäß Anspruch 8, wobei die Anforderung mehrere Header umfasst, und wobei vor dem Schritt einer Transcodierung und Komprimierung der Anforderung durch den Proxy-Server, das Verfahren weiter aufweist:
Untersuchen der Header der Anforderung;
Entfernen der Header aus der Anforderung, die durch das MDS-Gateway nicht akzeptabel sind;
Hinzufügen neuer Header zu der Anforderung, die durch das MDS-Gateway erforderlich sind; und
Tokenisieren der Header, die in der Anforderung verbleiben, und der neuen Header, die zu der Anforderung hinzugefügt werden.

10. Verfahren gemäß Anspruch 9, das vor dem Schritt eines Transcodierens und Dekomprimierens der Anforderung durch das MDS-Gateway weiter aufweist ein De-Tokenisieren der Header, die in der Anforderung verbleiben, und der neuen Header, die zu der Anforderung hinzugefügt werden.

11. Verfahren gemäß Anspruch 8, wobei die Nachricht, die durch das MDS-Gateway empfangen wird, einen oder mehrere Header umfasst, und wobei vor dem Schritt eines Transcodierens und Komprimierens der Anforderung durch das MDS-Gateway das Verfahren weiter aufweist ein Tokenisieren der Header der Nachricht.

12. Verfahren gemäß Anspruch 11, wobei nach dem Schritt eines Transcodierens und Dekomprimierens der Antwort durch den Proxy-Server das Verfahren weiter aufweist:
Untersuchen jedes Headers der Nachricht;
De-tokenisieren jedes Headers der Nachricht;
Entfernen von Headern der Nachricht, die durch den Browser nicht akzeptabel sind; und
Hinzufügen neuer Header zu der Nachricht, die durch den Browser erwartet werden.

13. Verfahren gemäß Anspruch 8, wobei die Anforderung eine Protokollanforderung unter Verwendung einer TCP-Verbindung ist.

14. Verfahren gemäß Anspruch 8, wobei die Anforderung eine Protokollanforderung unter Verwendung von UDP ist.

## Revendications

1. Système destiné à augmenter la vitesse de navigation sur un réseau en réglant un serveur mandataire (310) sur un dispositif portatif (110, 220), comprenant :
un navigateur (112, 212) fonctionnant sur le dispositif portatif, destiné à envoyer une demande pour demander un message à un premier site Web (118) ;
le serveur mandataire étant prévu sur le dispositif portatif pour transcoder et comprimer la demande ;
un réseau sans fil (224) relié de façon à pouvoir communiquer avec le serveur mandataire ; et
une passerelle (218) pour Service de Données Mobile (MDS pour Mobile Data Service) reliée de façon à pouvoir communiquer avec le réseau sans fil pour transcoder et décomprimer la demande, dans lequel ladite passerelle MDS est configurée pour recevoir ladite demande en provenance dudit serveur mandataire et pour envoyer ladite demande audit premier site Web, dans lequel ladite passerelle MDS est configurée pour recevoir une réponse en provenance dudit premier site Web ;
dans lequel, si ledit message n'est pas disponible en provenance du premier site Web,
la passerelle MDS est configurée pour recevoir la réponse comprenant une réponse de redirection incluant une adresse du message ; et
pour envoyer une demande de redirection à un deuxième site Web (120) à ladite adresse, lui demandant le message et en réponse à celui-ci, pour recevoir le message ;
la passerelle MDS est configurée pour transcoder et comprimer le message et pour l'envoyer audit serveur mandataire ;
lors de quoi le serveur mandataire est configuré pour transcoder et décomprimer le message et pour envoyer au navigateur une notification qui indique qu'une redirection s'est produite sur la passerelle MDS et qui comporte l'adresse ;
le navigateur est configuré pour envoyer une deuxième demande au serveur mandataire demandant le message ; et
en réponse à ladite deuxième demande, le serveur mandataire est configuré pour envoyer le message au navigateur.

2. Système selon la revendication 1, dans lequel la demande comporte de multiples en-têtes et dans lequel le serveur mandataire est configuré, avant de transcoder et de comprimer la demande, pour examiner individuellement chacun desdits en-têtes de la demande, afin d'éliminer de la demande les éventuels en-têtes ne pouvant pas être acceptés par la passerelle MDS, pour ajouter à la demande d'éventuels nouveaux en-têtes exigés par la passerelle MDS, et pour marquer les en-têtes restant dans la demande et les nouveaux en-têtes ajoutés à la demande.

3. Système selon la revendication 2, dans lequel la passerelle MDS est configurée pour annuler le marquage des en-têtes restant dans la demande et les nouveaux en-têtes ajoutés à la demande.

4. Système selon la revendication 1, dans lequel la passerelle MDS est configurée pour recevoir le message lorsque le message comporte un ou plusieurs en-têtes et
dans lequel la passerelle MDS est configurée pour marquer les en-têtes du message.

5. Système selon la revendication 1, dans lequel le serveur mandataire est configuré pour recevoir le message, lorsque le message comporte de multiples en-têtes, et dans lequel le serveur mandataire est configuré, avant d'envoyer le message au navigateur, pour examiner individuellement chaque en-tête du message, pour annuler le marquage de chaque en-tête du message, pour éliminer les éventuels en-têtes du message qui ne peuvent pas être acceptés par le navigateur, et pour ajouter au message d'éventuels nouveaux en-têtes attendus par le navigateur.

6. Système selon la revendication 1, qui est configuré pour envoyer la demande destinée à demander le message sous la forme d'une demande de protocole utilisant une connexion TCP.

7. Système selon la revendication 1, qui est configuré pour envoyer la demande destinée à demander le message sous la forme d'une demande de protocole utilisant l'UDP.

8. Procédé destiné à augmenter la vitesse de navigation sur un réseau en réglant un serveur mandataire (310) sur un dispositif portatif (110, 220), comprenant :
l'envoi d'une demande destinée à demander un message à un premier site Web (118) depuis un navigateur (112, 212) fonctionnant sur le dispositif portatif ;
le transcodage et la compression de la demande par le serveur mandataire ;
l'envoi de la demande par le serveur mandataire à une passerelle MDS (218) par l'intermédiaire d'un réseau sans fil (224) ;
le transcodage et la décompression de la demande par la passerelle MDS, et dans lequel la passerelle MDS envoie la demande audit premier site web ;
la réception d'une réponse en provenance du premier site Web par la passerelle MDS, dans lequel, si le message n'est pas disponible en provenance du premier site Web, la passerelle MDS reçoit une réponse comprenant une réponse de redirection comportant une adresse du message, et
l'envoi d'une demande de redirection demandant le message à un deuxième site Web (120) à l'adresse fournie par la passerelle MDS et, en réponse à celui-ci, la réception du message par la passerelle MDS ;
le transcodage et la compression du message par la passerelle MDS ;
l'envoi du message au serveur mandataire par l'intermédiaire du réseau sans fil par la passerelle MDS ;
le transcodage et la décompression du message par le serveur mandataire, dans lequel le serveur mandataire envoie au navigateur une notification indiquant qu'une redirection s'est produite sur la passerelle MDS, la notification comportant l'adresse ; et
la réception d'une deuxième demande en provenance du navigateur sur le serveur mandataire demandant le message et, en réponse à la deuxième demande, l'envoi par le serveur mandataire du message au navigateur.

9. Procédé selon la revendication 8, dans lequel la demande comporte de multiples en-têtes et dans lequel, avant l'étape de transcodage et de compression de la demande par le serveur mandataire, le procédé comprend en outre :
l'examen de chacun des en-têtes de la demande ;
l'élimination des éventuels en-têtes de la demande qui ne peuvent pas être acceptés par la passerelle MDS ;
l'ajout à la demande d'éventuels nouveaux en-têtes exigés par la passerelle MDS ; et
le marquage des en-têtes restant dans la demande et des nouveaux en-têtes ajoutés à la demande.

10. Procédé selon la revendication 9, comprenant en outre, avant l'étape de transcodage et de décompression de la demande par la passerelle MDS, l'annulation du marquage des en-têtes restant dans la demande et des nouveaux en-têtes ajoutés à la demande.

11. Procédé selon la revendication 8, dans lequel le message reçu par la passerelle MDS comporte un ou plusieurs en-têtes et dans lequel, avant l'étape de transcodage et de compression du message par la passerelle MDS, le procédé comprend en outre le marquage des en-têtes du message.

12. Procédé selon la revendication 11, dans lequel, après l'étape de transcodage et de décompression de la réponse par le serveur mandataire, le procédé comprend en outre :
l'examen de chacun des en-têtes du message ;
l'annulation du marquage de chacun des en-têtes du message ;
l'élimination des éventuels en-têtes du message qui ne peuvent pas être acceptés par le navigateur ; et
l'ajout au message d'éventuels nouveaux en-têtes attendus par le navigateur.

13. Procédé selon la revendication 8, dans lequel la demande est une demande de protocole utilisant une connexion TCP.

14. Procédé selon la revendication 8, dans lequel la demande est une demande de protocole utilisant l'UDP.
